# EUROPÄISCHE PATENTANMELDUNG

(11) **EP 2 657 845 A1**
(43) Veröffentlichungstag der Anmeldung: **30.10.2013**
(21) Anmeldenummer: 12165479.2
(22) Anmeldetag: 25.04.2012
(51) Int. Cl.: G06F 12/02, G06F 12/14

(54) **Verfahren zur Änderung von Daten bei einer Anforderung der Daten von einem physikalischen Speicher durch eine Empfangseinheit**

(71) Anmelder: Siemens Aktiengesellschaft, 80333 München (DE)
(72) Erfinder: Lang, Georg, 92237 Sulzbach-Rosenberg (DE)

(57) **Zusammenfassung**

Die Erfindung betrifft ein Verfahren zur Änderung von Daten bei einer Anforderung der Daten von einem physikalischen Speicher (102) durch eine Empfangseinheit (104), wobei die Daten in physikalischen Sektoren (126) des physikalischen Speichers (102) gespeichert sind, wobei Empfangsdaten aus den angeforderten Daten gemäß einem vordefinierten Änderungsmodus abgeleitet werden, wobei die Ableitung gemäß dem vordefinierten Änderungsmodus in einer Datenschnittstelle (100) zwischen der Empfangseinheit (104) und dem physikalischen Speicher (102) stattfindet, wobei die Empfangsdaten in der Datenschnittstelle (100) der Empfangseinheit (104) zur Verfügung gestellt werden.

## Beschreibung

Die Erfindung betrifft ein Verfahren zur Änderung von Daten bei einer Anforderung der Daten von einem physikalischen Speicher durch eine Empfangseinheit, eine Vorrichtung zwischen einer Empfangseinheit und einem physikalischen Speicher zur Änderung von Daten bei einer Anforderung der Daten von dem physikalischen Speicher durch die Empfangseinheit sowie ein Computerprogrammprodukt.

Im Stand der Technik kennzeichnet ein Flash-Speicher einen gelöschten Speicherblock unter Nutzung einer hexadezimalen Darstellung mittels 0xFF, während in einer dem Controller zugeordneten Fat Allocation Table ein entsprechender hexadezimaler Eintrag 0x00 einen für eine nachfolgende Speicherung von Werten in den betreffenden physikalischen Sektoren empfangsbereiten Zustand kennzeichnet. Ein Controller würde somit nur dann einen physikalischen Speicherblock als frei und damit empfangsbereit für eine Speicherung von Nutzdaten identifizieren, wenn die physikalischen Sektoren des physikalischen Speicherblocks mit 0x00 gekennzeichnet wären

Der Erfindung liegt die Aufgabe zugrunde, ein verbessertes Verfahren zur Kontrolle eines physikalischen Speichers, eine entsprechende Vorrichtung sowie ein Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren zur Änderung von Daten bei einer Anforderung der Daten von einem physikalischen Speicher durch eine Empfangseinheit geschaffen, wobei die Daten in physikalischen Sektoren des physikalischen Speichers gespeichert sind, wobei Empfangsdaten aus den angeforderten Daten gemäß einem vordefinierten Änderungsmodus abgeleitet werden, wobei die Ableitung gemäß dem vordefinierten Änderungsmodus in einer Datenschnittstelle zwischen der Empfangseinheit und dem physikalischen Speicher stattfindet, wobei die Empfangsdaten in der Datenschnittstelle der Empfangseinheit zur Verfügung gestellt werden.

Dies kann den Vorteil haben, dass von einer Empfangseinheit empfangene Daten in einer Datenschnittstelle zwischen der Empfangseinheit und dem physikalischen Speicher gemäß einem vordefinierten Änderungsmodus entweder in einer gewünschten von der Empfangseinheit interpretierbaren Form oder in einer von der Empfangseinheit nicht interpretierbaren Form transformiert werden können.

Bei Verwendung der Flash-Technologie ist ein einfaches Überschreiben einzelner physikalischer Sektoren nicht möglich. Bevor ein einzelner physikalischer Sektor mit einem neuen Wert überschrieben werden kann, ist es erforderlich, den jeweiligen physikalischen Speicherblock, zu dem die einzelnen physikalischen Sektoren gehören, komplett zu löschen. Nach der Löschung des ganzen physikalischen Speicherblocks erhält jeder physikalische Sektor die hexadezimale Kennzeichnung 0xFF. Diese Kennzeichnung wird dem jeweiligen Controller zur Verfügung gestellt. Der Controller veranlasst danach eine Umprogrammierung der den Zustand der physikalischen Sektoren beschreibenden Metadaten von der initialen hexadezimalen Darstellung 0xFF auf die hexadezimale Darstellung 0x00, damit ein entsprechender Verwaltungseintrag, zum Beispiel in der File Allocation Table, auf 0x00 gesetzt wird.

Die Änderung der hexadezimalen Codes 0xFF zu 0x00 in den physikalischen Sektoren eines gelöschten physikalischen Speicherblocks impliziert einen vollständigen Programmierzyklus. Flash-Speicher haben jedoch eine begrenzte Programmier-/Löschzyklenanzahl während ihrer effektiven Lebensdauer zur Verfügung (z. B. 100000 Programmier-/Löschzyklen). Durch die technologische Weiterentwicklung der Flash-Speicher, welche mit einer Förderung von Shrink-Prozessen zur Vergrößerung der Speichermenge auf gleicher Fläche zur Reduzierung der Kosten pro Datenmenge und zur Erhöhung der Performance für große Datenmengen verbunden ist, wird die Anzahl der zur Verfügung stehenden Programmier-/Löschzyklen weiter reduziert. Gleichzeitig werden durch die technologische Weiterentwicklung auch die Löschgruppen immer größer. Die mit der technologischen Weiterentwicklung verbundenen Shrink-Prozesse bewirken, dass der Durchsatz beim Löschen stärker wächst als der Durchsatz beim Programmieren.

Auch in dem oben beschriebenen Beispiel zur Umprogrammierung gelöschter physikalischer Sektoren auf einem von einer File Allocation Table als "frei" zu interpretierenden Hexadezimalcode steht die Menge an zu löschenden physikalischen Sektoren in einem ineffizienten Verhältnis zu deren Umprogrammierung. Der für die Programmierung erforderliche Programmierschritt beeinflusst in negativer Weise die Performance und die Lebensdauer des Flash-Speichers, welcher nur eine begrenzte Programmier-/Löschzyklenanzahl aufweist. Ein Verfahren, welches diesen zusätzlichen verwaltungstechnisch notwendigen Programmierzyklus ersparen würde, würde einer frühzeitigen Alterung des physikalischen Flash-Speichers entgegenwirken. In diesem speziellen Fall müsste solch ein Verfahren eine Transformation der Daten bei einer Kommunikation zwischen dem Controller und Flash-Speicher, insbesondere eine Änderung von Daten, die der Controller aus dem physikalischen Speicher des Flash-Speichers abruft, umfassen.

Im Fall einer gewünschten und von der Empfangseinheit interpretierbaren Form der Datentransformation der angeforderten Daten kann ein Programmierschritt zur Änderung von Daten, die in den physikalischen Sektoren des physikalischen Speichers gespeichert sind, eingespart werden. Im Falle, dass die von der Empfangseinheit angeforderten Daten in der Datenschnittstelle in eine für die Empfangseinheit nicht interpretierbare Form transformiert werden, könnte die Sicherheit gegen ein unerwünschtes Abhören eines Datenaustausches zwischen der Empfangseinheit und dem physikalischen Speicher signifikant erhöht werden.

Der Datenverkehr zwischen einem Speichersystem und einem Prozessor kann somit nicht abgehört und für Reverse Engineering genutzt werden. Die Schnittstelle zwischen dem Speichersystem und dem Prozessor stellt keine Schwachstelle mehr hinsichtlich eines abhörsicheren Datenaustausches zwischen zwei getrennten Entitäten dar.

Durch die Einsparung eines Schreib-/Löschzugriffs auf physikalische Sektoren des physikalischen Speichers im ersten Falle werden die Performance und die Lebensdauer des physikalischen Speichers bei mehrmaliger Anwendung des Verfahrens wesentlich erhöht. Eine Verschlüsselung der Daten im zweiten Falle beim Transfer der Daten von dem physikalischen Speicher zur Empfangseinheit über die Datenschnittstelle erschwert ein unerwünschtes Abhören der Daten. Bei Einsatz eines vordefinierten Änderungsmodus der Verschlüsselung der Daten mit hohem Komplexitätsgrad und von außen nicht transparenter Verschlüsselungsweise wird auch ein Reverse Engineering der empfangenen Daten fast unmöglich gemacht.

Nach einer Ausführungsform der Erfindung ist die Empfangseinheit eine Steuereinheit zur Verwaltung der Speicherung und des Lesens der Daten in physikalischen Sektoren des physikalischen Speichers.

Dies kann den Vorteil haben, dass Inkompatibilitäten zwischen von einer Steuereinheit und einem physikalischen Speicher verwendeten Codes zur Beschreibung beispielsweise desselben Zustandes von physikalischen Sektoren nun durch eine vordefinierte Transformation der von der Empfangseinheit angeforderten Daten in der Datenschnittstelle zwischen der Empfangseinheit und dem physikalischen Speicher beseitigt werden können. Verwaltungstechnisch notwendige Programmierschritte zur Umprogrammierung von Inhalten der physikalischen Sektoren des physikalischen Speichers zur Herstellung einer formalen Identität von vom physikalischen Speicher und von der Steuereinheit verwendeten Codes wären nicht mehr erforderlich. Die Anzahl der rein verwaltungstechnisch bedingten Programmier-/Löschzyklenanzahl könnte bezogen auf die Lebensdauer des physikalischen Speichers erheblich reduziert werden. Gleichzeitig könnte die Anzahl der Programmier-/Löschzyklenanzahl, welche für eine Programmierung der physikalischen Sektoren mit tatsächlichen Nutzdaten in Anspruch genommen würden, gesteigert werden, so dass ein physikalischer Speicher bezogen auf seine Lebensdauer einen höheren Effizienzgrad zur Speicherung von tatsächlichen Nutzdaten erreichen könnte.

Nach einer Ausführungsform der Erfindung ist der physikalische Speicher ein Flash-Speicher, wobei der Flash-Speicher physikalische Speicherblöcke mit den physikalischen Sektoren aufweist, wobei im physikalischen Speicher ein gelöschter Zustand einer der physikalischen Speicherblöcke durch einen ersten Code beschrieben ist und ein freier Zustand einer der Speicherblöcke durch einen zweiten Code beschrieben ist, wobei der erste Code und der zweite Code verschieden voneinander sind, wobei bei der Anforderung der Daten durch die Datenschnittstelle mit den angeforderten Daten Metadaten empfangen werden, wobei im Falle, dass die Metadaten den ersten Code aufweisen, der erste Code durch den Änderungsmodus in den zweiten Code transformiert wird.

Dies kann den Vorteil haben, dass ein vom physikalischen Speicher als "gelöscht" gekennzeichneter Speicherblock von der Steuereinheit, welche den Flash-Speicher verwaltet, als "freier" physikalischer Speicherblock interpretiert wird, welcher für einen Empfang von zu speichernden Daten zur Verfügung steht. Eine Umprogrammierung des physikalischen Speicherblocks vom Zustand "gelöscht" auf "frei" ist nicht mehr erforderlich. Ein verwaltungstechnisch bedingter Programmier/Löschzyklus entfällt somit. Der entfallene Programmier/Löschzyklus kann somit für eine Programmierung bzw. Löschung von tatsächlichen Nutzdaten genutzt werden. Der Effizienzgrad des physikalischen Speichers zur Speicherung von tatsächlichen Nutzdaten kann somit erhöht werden. Somit kann die effektive Lebensdauer des physikalischen Speichers bei mehrmaliger Anwendung des Verfahrens wesentlich verlängert werden.

Nach einer Ausführungsform der Erfindung umfassen die angeforderten Daten Nutzdaten, wobei die Nutzdaten in den physikalischen Sektoren gespeichert sind, wobei die Datenschnittstelle mit der Anforderung der Daten weiter einen Schlüssel empfängt, wobei der Schlüssel einen ersten Änderungsmodus der angeforderten Nutzdaten mitbestimmt.

Dies kann den Vorteil haben, dass die angeforderten Daten nur mit Kenntnis des Schlüssels von der die Daten anfordernden Empfangseinheit gelesen werden können. Bei Unkenntnis des Schlüssels zur Verschlüsselung der Daten ist ein Lesen der Daten, so wie sie in den physikalischen Sektoren des physikalischen Speichers abgespeichert sind, nicht möglich. Ein Abhören der in den physikalischen Sektoren gespeicherten Daten durch Unerwünschte wird somit in einfacher Weise Einhalt geboten.

Nach einer Ausführungsform der Erfindung ist der Schlüssel einer Gruppe der physikalischen Sektoren zugeordnet, wobei die angeforderten Daten in den physikalischen Sektoren der Gruppe gespeichert sind.

Dies kann den Vorteil haben, dass der Komplexitätsgrad der Verschlüsselung der angeforderten Daten beispielsweise durch eine adressbereichsspezifische Nutzung von verschiedenen Schlüsseln für verschiedene Gruppen von physikalischen Sektoren erhöht werden kann. Zudem kann eine Verschlüsselung der angeforderten Daten selektiv erfolgen, indem beispielsweise nur ein Teil der angeforderten Daten verschlüsselt wird, während der andere Teil der Daten transparent, ohne eine Änderung, an die Empfangseinheit weitergeleitet wird.

Nach einer Ausführungsform der Erfindung umfasst das Verfahren weiter eine Identifizierung der Gruppe der physikalischen Sektoren, wobei der Schlüssel als Ergebnis dieser Identifizierung aus einer Gruppe von Schlüsseln ausgewählt wird.

Dies kann den Vorteil haben, dass ein Schlüssel spezifisch für eine bestimmte Gruppe von physikalischen Sektoren des physikalischen Sektors vordefiniert werden kann und bei erfolgter Identifizierung der von der Datenschnittstelle empfangenen Daten als von den vordefinierten Gruppen von physikalischen Sektoren stammend ein Schlüssel gruppenspezifisch angewandt werden kann. Die angeforderten Daten können somit gemäß einem vordefinierten Verschlüsselungsschema und der Zuordnung eines bestimmten Schlüssels zu Daten, welche in vordefinierten Gruppen von physikalischen Sektoren gespeichert werden, erfolgen. Bei Kenntnis dieses Verschlüsselungsschemas kann eine Empfangseinheit wiederum die verschlüsselten empfangenen Daten entschlüsseln.

Nach einer Ausführungsform der Erfindung sind dem Schlüssel mehrere Schlüsselinhalte zugeordnet, wobei bei mehrmaliger Anforderung der Daten für jede Anforderung einer der Schlüsselinhalte dynamisch wechselnd für den Schlüssel verwendet wird, wobei die Reihenfolge des dynamischen Wechsels der Schlüsselinhalte vordefiniert ist.

Dies kann den Vorteil haben, dass der Komplexitätsgrad der Verschlüsselung der angeforderten Daten noch signifikanter erhöht wird und eine Entschlüsselung der angeforderten Daten sowie ein Reverse Engineering durch Unerwünschte noch mehr erschwert wird. Die Sicherheit der in einem physikalischen Speicher gespeicherten Daten wird gegen ein Abhören durch Unerwünschte wesentlich erhöht.

Nach einer Ausführungsform der Erfindung erfolgt die Ableitung gemäß einer logischen Funktion, wobei der Änderungsmodus eine Anwendung der logischen Funktion zur Verschlüsselung der angeforderten Daten umfasst.

Dies kann den Vorteil haben, dass durch eine vordefinierte Parametrisierung und ein vordefiniertes Ansteuerverhalten jedes einzelne Bit der angeforderten Daten gemäß einer vordefinierten Logik manipuliert werden kann. So könnte zum Beispiel in einer Datenschnittstelle zwischen der Empfangseinheit und dem physikalischen Speicher, wobei die Datenleitungen zur Datenschnittstelle über EXOR-Gatter geführt werden, eine Invertierung einer entsprechenden Bitstelle im Datenpfad durchführen, wenn über ein vordefiniertes Steuersignal eine Invertierfunktion aktiviert werden würde.

Nach einer weiteren Ausführungsform werden zur Änderung von weiteren Daten bei einer Übermittlung der weiteren Daten von der Steuereinheit an den Speicher , wobei die weiteren Daten in der Steuereinheit gespeichert sind, weitere Empfangsdaten aus den weiteren Daten gemäß einem weiteren vordefinierten Änderungsmodus abgeleitet, wobei die Ableitung gemäß dem weiteren vordefinierten Änderungsmodus in einer weiteren Datenschnittstelle zwischen der Steuereinheit und dem Speicher stattfindet, wobei die weiteren Empfangsdaten dem Speicher zur Verfügung gestellt werden.

Dies kann den Vorteil haben, dass bei einer Kommunikation zwischen einer Steuereinheit und einem Gerät mit physikalischem Speicher eine Transformation der Daten in beiden Kommunikationsrichtungen durchgeführt werden kann. Dabei ist in jede Kommunikationsrichtung sowohl eine Transformation der angeforderten Daten in ein gewünschtes interpretierbares Empfangs-Datenmuster als auch eine Verschlüsselung der angeforderten Daten in ein nicht-interpretierbares Empfangs-Datenmuster möglich.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung eine Datenschnittstelle zwischen einer Empfangseinheit und einem physikalischen Speicher zur Änderung von Daten bei einer Anforderung der Daten von dem physikalischen Speicher durch die Empfangseinheit, wobei die Daten in physikalischen Sektoren des physikalischen Speichers gespeichert sind, wobei die Datenschnittstelle dazu ausgebildet ist:
- Empfangsdaten aus den angeforderten Daten gemäß einem vordefinierten Änderungsmodus abzuleiten, und
- die Empfangsdaten der Empfangseinheit zur Verfügung zu stellen.

Im Folgenden werden bevorzugte Ausführungsformen der Erfindung anhand der folgenden Zeichnungen näher erläutert.

Es zeigen:
- FIG 1: ein Blockdiagramm mit Darstellung von Schnittstellen zwischen einem physikalischen Flash-Speicher und einem Controller,
- FIG 2: eine Darstellung einer Adressen-Schnittstelle und einer Daten-Schnittstelle, wobei die Adressen-Schnittstelle ein Schlüsselregister aufweist, und die Datenschnittstelle eine logische Schaltung zur Änderung von Daten aufweist,
- FIG 3: ein Blockdiagramm zur Darstellung zweier Vorrichtungen, welche über Komponenten spezifische Datenschnittstellen Daten austauschen.

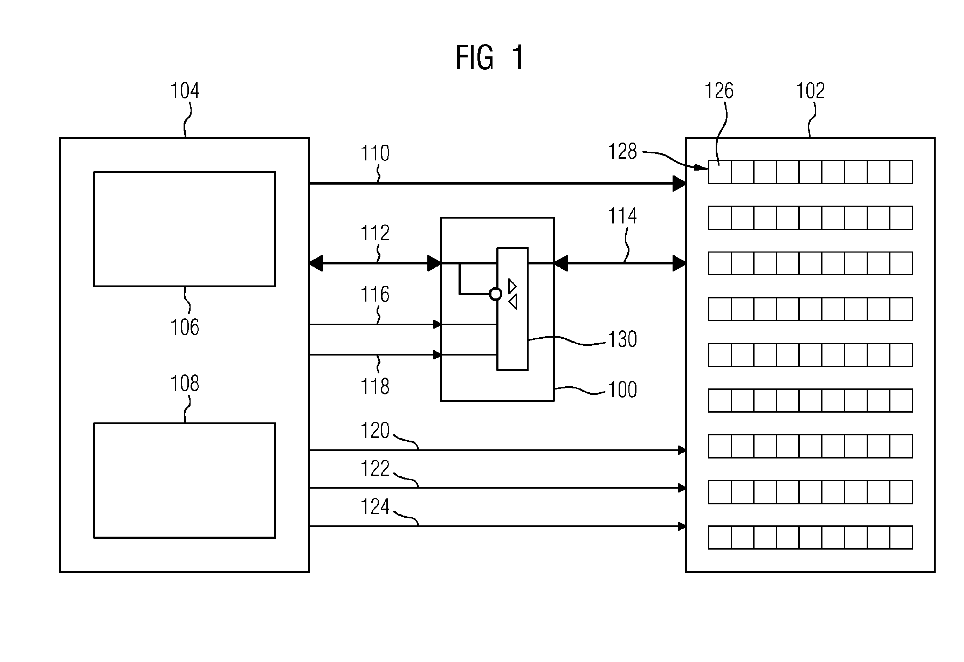

Die FIG 1 zeigt ein Blockdiagramm zur Veranschaulichung eines Datenaustausches zwischen einem physikalischem Flash-Speicher 102 und einem den Flash-Speicher 102 steuernden Controller 104. Der physikalische Flash-Speicher 102 weist physikalische Speicherblöcke 128 auf, welche aus physikalischen Sektoren 126 bestehen. In den physikalischen Sektoren 126 können Daten gespeichert sein, welche der Controller 104 über die Datenleitungen 112 und 114 auslesen kann.

Standardmäßig kommuniziert der Controller 104 über eine Adressen-Schnittstelle 110 und die Datenleitungen 112 und 114 mit dem physikalischen Flash-Speicher. Die Steuerleitungen 122 (READ) und 124 (WRITE) steuern dabei die Kommunikationsrichtung. Ein Chip-Select-Signal 120 aktiviert den gewünschten Teil des physikalischen Speichers des physikalischen Flash-Speichers 102.

Wie die FIG 1 zeigt, wird in der vorliegenden Erfindung eine parametrierbare Datenschnittstelle 100 in die Datenleitung 112 und 114 eingefügt. Eine in der Datenschnittstelle 100 integrierte logische Schaltung 130 ermöglicht eine Änderung der Daten während eines Transfers der Daten vom physikalischen Flash-Speicher 102 zum Controller 104. Eine Richtungssteuerung 116 wird in Abhängigkeit von der Richtung des Datenaustausches zwischen dem physikalischen Flash-Speicher 102 und dem Controller 104 gesteuert. Mittels eines Steuersignals 118 kann eine Änderung der Daten mittels der logischen Schaltung 130 aktiviert werden.

Dem Controller 104 ist eine File-Allocation-Table 104 zugeordnet, welche einer adressbasierten Verwaltung der physikalischen Sektoren 126 des physikalischen Flash-Speichers 102 dient. In einem Modul 108 des Controllers 104 befindet sich ein spezielles controllerspezifisches Steuerungsprogramm 108 zur Verwaltung der physikalischen Speicherblöcke 128 des physikalischen Flash-Speichers 102.

Die logische Schaltung 130 könnte beispielsweise eine Invertierung der Daten, welche durch den Controller 104 von den physikalischen Sektoren 126 des physikalischen Flash-Speichers 102 angefordert werden, bewirken. So könnte beispielsweise ein hexadezimaler Code, welcher die physikalischen Sektoren 126 eines physikalischen Speicherblocks 128 des physikalischen Flash-Speichers 102 als in einem "gelöschten" Zustand beschreibt (zum Beispiel: 0xFF) durch die in der logischen Schaltung 130 der Datenschnittstelle 100 bewirkte Invertierung in einen Hexadezimalcode transformiert werden, welcher die betreffenden physikalischen Sektoren als in einem "freien" Zustand befindlich beschreibt (z.B. 0x00). Solch eine Invertierfunktion würde einen Programmierzyklus mit Umprogrammierung der physikalischen Sektoren 126 von 0xFF zu 0x00 nicht mehr erforderlich machen, um dadurch einen entsprechenden Verwaltungseintrag in der File Allocation Table 106 auf 0x00 zu setzen.

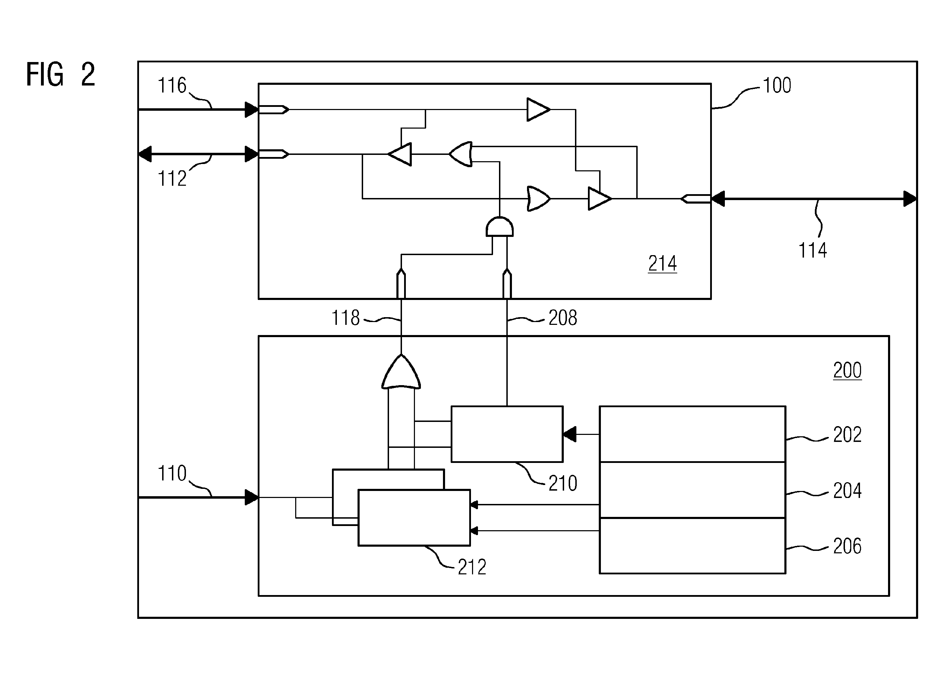

Die FIG 2 zeigt eine Darstellung einer modifizierten Adressen-Schnittstelle 110 und den Datenleitungen 114 und 112, zwischen die eine spezifische Datenschnittstelle 100 mit integrierter spezifischer logischer Schaltung 214 eingefügt ist. Die Adressen-Schnittstelle 110 weist einen Bereich 200 zur Konfiguration eines Schlüsselregisters 202 auf. Für eine adressbereichsspezifische Nutzung eines Schlüssels 208 kann mittels der Parameter 204 und 206 ein Adressenintervall zur Anwendung des Schlüssels 208 auf eine Gruppe von physikalischen Sektoren 126 des physikalischen Flash-Speichers 102 definiert werden.

Ein Komparator 212 vergleicht die physikalischen Sektoren, deren Inhalte durch eine Empfangseinheit, wie zum Beispiel den Controller 104, angefordert wurde, mit vordefinierten, jeweils durch ein Adressenintervall beschriebenen Gruppen von physikalischen Sektoren, für welche ein bestimmter Schlüssel 208 nach Selektion durch einen Multiplexer 210 angewandt werden soll. Bei einer erfolgreichen Identifizierung einer Gruppe von physikalischen Sektoren, auf die der Schlüssel 208 angewandt werden soll, veranlässt der Komparator 212 ein Steuersignal 118 zur Aktivierung einer Änderung der die Datenschnittstelle 100 passierenden Daten mittels der logischen Schaltung 214. Das Steuersignal 118 zeigt somit der logischen Schaltung 214 der Datenschnittstelle 110 an, ob ein gültiger Schlüssel 208 zur Änderung der Daten vorliegt oder nicht. Liegt das Steuersignal 118 nicht an, so werden die Daten von der Datenleitung 114 zur Datenleitung 112 in einem transparenten Modus, das heißt 1:1 durchgeleitet, wobei keine Änderung der Daten erfolgt.

Neben einer adressbereichsspezifischen Nutzung von Schlüsseln zur unterschiedlichen Verschlüsselung von verschiedenen Gruppen von physikalischen Sektoren 126 des physikalischen Flash-Speichers 102 bei deren Anforderung durch eine Empfangseinheit, wie zum Beispiel den Controller 104, können auch andere Methoden zum Wechseln von Schlüsseln realisiert werden. So kann beispielsweise ein dynamischer Wechsel von verschiedenen Schlüsseln erfolgen in Abhängigkeit von:
- einem Datenvolumen der angeforderten Daten,
- von einer Art der Kontrolle durch die Empfangseinheit,
- von einer Identifizierung der Empfangseinheit,
- von einer Anmeldeart der Empfangseinheit, und/oder
- von einem Steuerungs- und Kontrollprogramm der Empfangseinheit.

Ebenso kann der Schlüssel in einem Softwareprodukt permanent gespeichert sein oder auch nur temporär vorhanden sein.

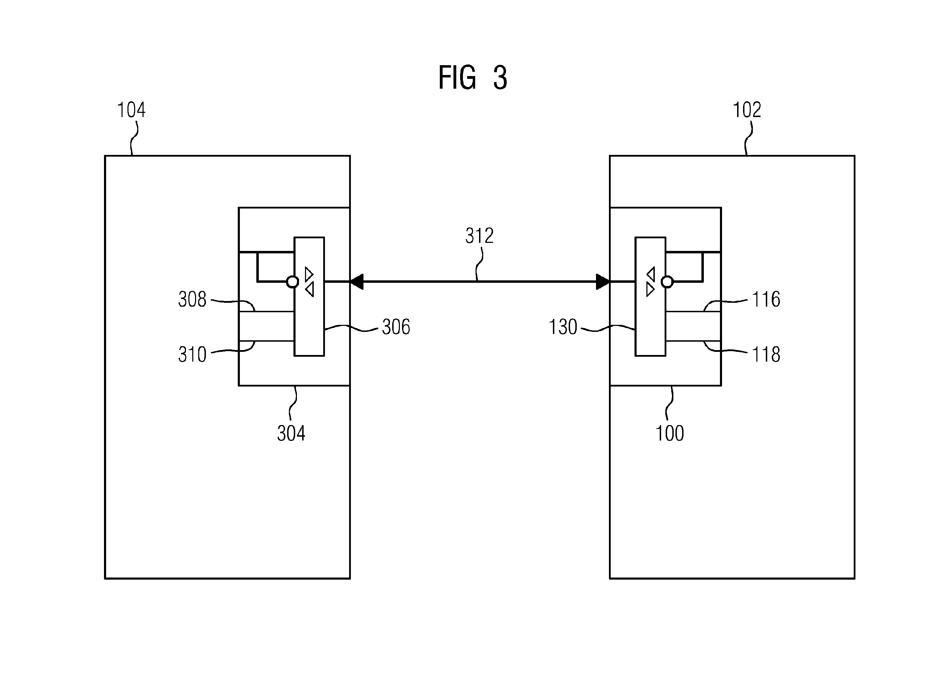

FIG 3 zeigt ein Blockdiagramm zur Darstellung eines wechselseitigen Datenaustausches zwischen einer Steuereinheit 104 und einem physikalischen Speicher 102, welcher Teil eines Geräts (nicht dargestellt) ist, über eine Datenleitung 312 unter Nutzung einer für die Steuereinheit spezifischen Datenschnittstelle 304 und einer für das Gerät spezifischen Datenschnittstelle 100. Die Datenschnittstelle 100 weist eine logische Schaltung 130 auf, die durch eine Steuerleitung 118 für eine Transformation von Daten aktiviert werden kann, wobei die Richtung der Transformation der Daten durch eine Richtungssteuerung 116 gesteuert werden kann. Die weitere Datenschnittstelle 304 weist ebenfalls eine logische Schaltung 306 auf, die durch ein Steuersignal 310 zu einer Transformation von Daten veranlasst werden kann, wobei die Richtung der Transformation der Daten durch eine Richtungssteuerung 308 gesteuert werden kann.

Jede der Datenschnittstellen 100 und 304 weist die oben beschriebene Funktionalität der oben beschriebenen Datenschnittstelle 100 auf, wie sie in FIG 1 und 2 dargestellt wurde.

Die Anzahl der kommunizierenden Komponenten ist nicht auf zwei limitiert. Das beschriebene Verfahren lässt sich auch auf eine Vielzahl von Komponenten anwenden, die miteinander kommunizieren, wobei jede der Komponenten eine spezifische Datenschnittstelle aufweist, deren Funktionalität der oben beschriebenen Datenschnittstelle 100 entspricht. Dabei ist es auch unerheblich, ob sich die beiden miteinander kommunizierenden Komponenten beispielsweise auf derselben Leiterplatte befinden oder über Kommunikationsnetze miteinander verbunden sind, wobei im letzteren Falle wiederum die Art des Kommunikationsnetzes beliebig sein kann.

## Patentansprüche

1. Verfahren zur Änderung von Daten bei einer Anforderung der Daten von einem physikalischen Speicher (102) durch eine Empfangseinheit (104), wobei die Daten in physikalischen Sektoren (126) des physikalischen Speichers (102) gespeichert sind, wobei Empfangsdaten aus den angeforderten Daten gemäß einem vordefinierten Änderungsmodus abgeleitet werden, wobei die Ableitung gemäß dem vordefinierten Änderungsmodus in einer Datenschnittstelle (100) zwischen der Empfangseinheit (104) und dem physikalischen Speicher (102) stattfindet, wobei die Empfangsdaten in der Datenschnittstelle (100) der Empfangseinheit (104) zur Verfügung gestellt werden.

2. Verfahren nach Anspruch 1, wobei die Empfangseinheit eine Steuereinheit (104) zur Verwaltung der Speicherung und des Lesens der Daten in den physikalischen Sektoren (126) des physikalischen Speichers (102) ist.

3. Verfahren nach Anspruch 2, wobei der physikalische Speicher (102) ein Flash Speicher (102) ist, wobei der Flash Speicher (102) physikalische Speicherblöcke (128) mit den physikalischen Sektoren (126) aufweist, wobei im physikalischen Speicher (102) ein gelöschter Zustand einer der physikalischen Speicherblöcke (128) durch einen ersten Code beschrieben ist und ein freier Zustand einer der Speicherblöcke (128) durch einen zweiten Code beschrieben ist, wobei der erste Code und der zweite Code verschieden voneinander sind, wobei bei der Anforderung der Daten durch die Datenschnittstelle (100) mit den angeforderten Daten Metadaten empfangen werden, wobei im Falle, dass die Metadaten den ersten Code aufweisen, der erste Code durch den Änderungsmodus in den zweiten Code transformiert wird.

4. Verfahren nach einem der vorhergehenden Ansprüche, wobei die angeforderten Daten Nutzdaten umfassen, wobei die Nutzdaten in den physikalischen Sektoren (126) gespeichert sind, wobei die Datenschnittstelle (100) mit der Anforderung der Daten weiter einen Schlüssel (208) empfängt, wobei der Schlüssel (208) einen ersten Änderungsmodus der angeforderten Nutzdaten mitbestimmt.

5. Verfahren nach Anspruch 4, wobei der Schlüssel (208) einer Gruppe der physikalischen Sektoren (126) zugeordnet ist, wobei die angeforderten Daten in den physikalischen Sektoren (126) der Gruppe gespeichert sind.

6. Verfahren nach Anspruch 5, wobei das Verfahren weiter eine Identifizierung der Gruppe der physikalischen Sektoren (126) umfasst, wobei der Schlüssel (208) als Ergebnis dieser Identifizierung aus einer Gruppe von Schlüsseln (208) ausgewählt wird.

7. Verfahren nach Anspruch 5 oder 6, wobei dem Schlüssel (208) mehrere Schlüsselinhalte zugeordnet sind, wobei bei mehrmaliger Anforderung der Daten für jede Anforderung einer der Schlüsselinhalte dynamisch wechselnd für den Schlüssel (208) verwendet wird, wobei die Reihenfolge des dynamischen Wechsels der Schlüsselinhalte vordefiniert ist.

8. Verfahren nach einem der vorhergehenden Ansprüche, wobei die Ableitung gemäß einer logischen Funktion erfolgt, wobei der Änderungsmodus eine Anwendung der logischen Funktion zur Verschlüsselung der angeforderten Daten umfasst.

9. Verfahren nach einem der vorhergehenden Ansprüche, wobei zur Änderung von weiteren Daten bei einer Übermittlung der weiteren Daten von der Steuereinheit (104) an den Speicher (102), wobei die weiteren Daten in der Steuereinheit gespeichert sind, weitere Empfangsdaten aus den weiteren Daten gemäß einem weiteren vordefinierten Änderungsmodus abgeleitet werden, wobei die Ableitung gemäß dem weiteren vordefinierten Änderungsmodus in einer weiteren Datenschnittstelle (304) zwischen der Steuereinheit (104) und dem Speicher (102) stattfindet, wobei die weiteren Empfangsdaten dem Speicher (102) zur Verfügung gestellt werden.

10. Computerprogrammprodukt mit von einem Prozessor ausführbaren Instruktionen zur Durchführung der Verfahrensschritte gemäß einem der vorigen Ansprüche.

11. Datenschnittstelle (100) zwischen einer Empfangseinheit (104) und einem physikalischen Speicher (102) zur Änderung von Daten bei einer Anforderung der Daten von dem physikalischen Speicher (102) durch die Empfangseinheit (104), wobei die Daten in physikalischen Sektoren (126) des physikalischen Speichers (102) gespeichert sind, wobei die Datenschnittstelle (100) dazu ausgebildet ist:
- Empfangsdaten aus den angeforderten Daten gemäß einem vordefinierten Änderungsmodus abzuleiten, und
- die Empfangsdaten der Empfangseinheit (104) zur Verfügung zu stellen.

## Geänderte Patentansprüche

### Geänderte Patentansprüche gemäss Regel 137(2) EPÜ.

**1.** Verfahren zur Änderung von Daten bei einer Anforderung der Daten von einem physikalischen Speicher (102) durch eine Empfangseinheit (104), wobei die Daten in physikalischen Sektoren (126) des physikalischen Speichers (102) gespeichert sind, wobei Empfangsdaten aus den angeforderten Daten gemäß einem vordefinierten Änderungsmodus abgeleitet werden, wobei die Ableitung gemäß dem vordefinierten Änderungsmodus in einer Datenschnittstelle (100) zwischen der Empfangseinheit (104) und dem physikalischen Speicher (102) stattfindet, wobei die Empfangsdaten in der Datenschnittstelle (100) der Empfangseinheit (104) zur Verfügung gestellt werden, wobei die Empfangseinheit eine Steuereinheit (104) zur Verwaltung der Speicherung und des Lesens der Daten in den physikalischen Sektoren (126) des physikalischen Speichers (102) ist, wobei der physikalische Speicher (102) ein Flash Speicher (102) ist, wobei der Flash Speicher (102) physikalische Speicherblöcke (128) mit den physikalischen Sektoren (126) aufweist, wobei im physikalischen Speicher (102) ein gelöschter Zustand einer der physikalischen Speicherblöcke (128) durch einen ersten Code beschrieben ist und ein freier Zustand einer der Speicherblöcke (128) durch einen zweiten Code beschrieben ist, wobei der erste Code und der zweite Code verschieden voneinander sind, wobei bei der Anforderung der Daten durch die Datenschnittstelle (100) mit den angeforderten Daten Metadaten empfangen werden, wobei im Falle, dass die Metadaten den ersten Code aufweisen, der erste Code durch den Änderungsmodus in den zweiten Code transformiert wird.

**2.** Verfahren nach einem der vorhergehenden Ansprüche, wobei die angeforderten Daten Nutzdaten umfassen, wobei die Nutzdaten in den physikalischen Sektoren (126) gespeichert sind, wobei die Datenschnittstelle (100) mit der Anforderung der Daten weiter einen Schlüssel (208) empfängt, wobei der Schlüssel (208) einen ersten Änderungsmodus der angeforderten Nutzdaten mitbestimmt.

**3.** Verfahren nach Anspruch 2, wobei der Schlüssel (208) einer Gruppe der physikalischen Sektoren (126) zugeordnet ist, wobei die angeforderten Daten in den physikalischen Sektoren (126) der Gruppe gespeichert sind.

**4.** Verfahren nach Anspruch 3, wobei das Verfahren weiter eine Identifizierung der Gruppe der physikalischen Sektoren (126) umfasst, wobei der Schlüssel (208) als Ergebnis dieser Identifizierung aus einer Gruppe von Schlüsseln (208) ausgewählt wird.

**5.** Verfahren nach Anspruch 3 oder 4, wobei dem Schlüssel (208) mehrere Schlüsselinhalte zugeordnet sind, wobei bei mehrmaliger Anforderung der Daten für jede Anforderung einer der Schlüsselinhalte dynamisch wechselnd für den Schlüssel (208) verwendet wird, wobei die Reihenfolge des dynamischen Wechsels der Schlüsselinhalte vordefiniert ist.

**6.** Verfahren nach einem der vorhergehenden Ansprüche, wobei die Ableitung gemäß einer logischen Funktion erfolgt, wobei der Änderungsmodus eine Anwendung der logischen Funktion zur Verschlüsselung der angeforderten Daten umfasst.

**7.** Verfahren nach einem der vorhergehenden Ansprüche, wobei zur Änderung von weiteren Daten bei einer Übermittlung der weiteren Daten von der Steuereinheit (104) an den Speicher (102), wobei die weiteren Daten in der Steuereinheit gespeichert sind, weitere Empfangsdaten aus den weiteren Daten gemäß einem weiteren vordefinierten Änderungsmodus abgeleitet werden, wobei die Ableitung gemäß dem weiteren vordefinierten Änderungsmodus in einer weiteren Datenschnittstelle (304) zwischen der Steuereinheit (104) und dem Speicher (102) stattfindet, wobei die weiteren Empfangsdaten dem Speicher (102) zur Verfügung gestellt werden.

**8.** Computerprogrammprodukt mit von einem Prozessor ausführbaren Instruktionen zur Durchführung der Verfahrensschritte gemäß einem der vorigen Ansprüche.

**9.** Datenschnittstelle (100) zur Änderung von Daten bei einer Anforderung der Daten von einem physikalischen Speicher (102) durch eine Empfangseinheit (104), wobei die Daten in physikalischen Sektoren (126) des physikalischen Speichers (102) gespeichert sind, wobei die Datenschnittstelle (100) dazu ausgebildet ist:
- Empfangsdaten aus den angeforderten Daten gemäß einem vordefinierten Änderungsmodus abzuleiten, und
- die Empfangsdaten der Empfangseinheit (104) zur Verfügung zu stellen,
wobei die Empfangseinheit eine Steuereinheit (104) zur Verwaltung der Speicherung und des Lesens der Daten in den physikalischen Sektoren (126) des physikalischen Speichers (102) ist, wobei der physikalische Speicher (102) ein Flash Speicher (102) ist, wobei der Flash Speicher (102) physikalische Speicherblöcke (128) mit den physikalischen Sektoren (126) aufweist, wobei im physikalischen Speicher (102) ein gelöschter Zustand einer der physikalischen Speicherblöcke (128) durch einen ersten Code beschrieben ist und ein freier Zustand einer der Speicherblöcke (128) durch einen zweiten Code beschrieben ist, wobei der erste Code und der zweite Code verschieden voneinander sind, wobei die Datenschnittstelle (100) ferner dazu ausgebildet ist, bei der Anforderung der Daten mit den angeforderten Daten Metadaten zu empfangen und im Falle, dass die Metadaten den ersten Code aufweisen, den erste Code durch den Änderungsmodus in den zweiten Code zu transformieren.
